# EUROPEAN PATENT APPLICATION

(11) **EP 4 300 611 A2**
(43) Date of publication of application: **03.01.2024**
(21) Application number: 23154528.6
(22) Date of filing: 01.02.2023
(51) Int. Cl.: H01M 4/00

(54) **AMINE-FUNCTIONALIZED SILVER NANOPARTICLES FOR GAS DIFFUSION ELECTRODES**

(30) Priority: 21.02.2022 US 202217676669
(71) Applicant: Xerox Corporation, Webster, NY 14580 (US)
(72) Inventor: ZHU, Yujie, Mississauga, L5B 0C2 (CA); KNAPIK, Benjamin, Port Moody, V3H 0L2 (CA); HALFYARD, Kurt I., Mississauga, L5M 6K7 (CA); CLARIDGE, Robert, Cambridge, N3C 3K9 (CA); LAWTON, David, Burlington, L7M 3N5 (CA); ABDOLLAHI, Atousa, Toronto, M8V 0C4 (CA)
(74) Representative: Grünecker Patent- und Rechtsanwälte PartG mbB

(57) **Abstract**

An electrode and a method for fabricating the same is disclosed. For example, the method to fabricate the electrode includes preparing a deposition composition comprising amine-functionalized silver nanoparticles and a solvent and depositing the deposition composition onto an electrically conductive substrate. The electrode can be deployed in a gas diffusion electrode.

## Description

The present disclosure relates generally to membrane electrode assemblies and relates more particularly to gas diffusion electrodes with amine-functionalized silver nanoparticles used in various conversion systems.

### BACKGROUND

The emission of greenhouse gases (GHGs) like CO₂ is causing depletion of the earth's ozone layer and the global temperature increase, leading to adverse effects on human health, agriculture, and water resources. To mitigate global climate change, worldwide interest has been focused onto the field of CO₂ capture and utilization (CCU), where electro-catalytic conversion of CO₂ into value-added chemicals and synthetic fuels is one of the attractive approaches. With appropriate electro-catalysts and reaction conditions including overpotential, reaction temperature, and electrolyte, etc., CO₂ can be electrochemically converted into various products such as carbon monoxide (CO), methane (CH₄), ethylene (C₂H₄), formic acid (HCOOH), methanol (CH₃OH) and ethanol (C₂H₅OH), etc.

At the current stage, electrochemical conversion of CO₂ into CO is one of the most promising reactions, due to its high technological and economic feasibility. In this reaction, syngas (CO and H₂) can be generated in an energy-efficient way and then used as feedstocks to produce synthetic hydrocarbons via Fischer-Tropsch synthesis process.

### SUMMARY

According to aspects illustrated herein, there is provided a membrane electrode assembly and a method for fabricating an electrode for the membrane electrode assembly. One disclosed feature of the embodiments is a method comprising preparing a deposition composition comprising amine-functionalized silver nanoparticles and a solvent and depositing the deposition composition onto an electrically conductive substrate.

Another disclosed feature of the embodiments is another method to fabricate a gas diffusion electrode. The method comprises preparing amine-functionalized silver nanoparticles, preparing the amine-functionalized silver nanoparticles in a jettable ink form, printing the amine-functionalized silver nanoparticles onto a carbon substrate, and sintering the amine-functionalized silver nanoparticles on the carbon substrate to achieve a desired conversion of carbon dioxide into carbon monoxide with a Faradic efficiency greater than 60%, with a selectivity greater than 98% at overpotentials less than 3.5 Volts (V).

Another disclosure feature of the embodiments is a membrane electrode assembly. The method comprises printing a cathode the cathode comprising sintered amine-functionalized silver nanoparticles spray coated onto a carbon substrate that converts carbon dioxide in the carbon dioxide flow chamber Faradic efficiency greater than 60% at a cell potential less than 3.5 Volts with a selectivity of carbon monoxide at greater than 98%, an ion exchange membrane coupled to the cathode, and an anode coupled to the ion exchange membrane.

### BRIEF DESCRIPTION OF THE DRAWINGS

The teaching of the present disclosure can be readily understood by considering the following detailed description in conjunction with the accompanying drawings, in which:
FIG. 1 illustrates an exploded block diagram of an example membrane electrode assembly with a gas diffusion electrode of the present disclosure;
FIG. 2 illustrates a block diagram of an example printer used to spray amine functionalized silver nanoparticles onto a carbon substrate to fabricate the gas diffusion electrode of the present disclosure;
FIG. 3 illustrates a flowchart of an example method for fabricating a gas diffusion electrode of the present disclosure;
FIG. 4 illustrates a flowchart of another example method for fabricating a gas diffusion electrode of the present disclosure;
FIG. 5 illustrates SEM images of different gas diffusion electrodes with and without amine functionalized silver nanoparticles with and without sintering;
FIG. 6 illustrates a graph of Faradaic efficiency versus cell potential for varied sintered conditions;
FIG. 7 illustrates energetic efficiency versus cell potential for varied sintered conditions;
FIG. 8 illustrates current density versus cell potential for varied sintered conditions;
FIG. 9 illustrates single pass conversion rates versus cell potential for varied sintered conditions;
FIG. 10 illustrates carbon monoxide reaction selectivity versus cell potential for varied sintered conditions;
FIG. 11 illustrates a graph of Faradaic efficiency versus cell potential for various unsintered applications of the amine functionalized silver nanoparticles;
FIG. 12 illustrates energetic efficiency versus cell potential for various unsintered applications of the amine functionalized silver nanoparticles;
FIG. 13 illustrates current density versus cell potential for various unsintered applications of the amine functionalized silver nanoparticles; and
FIG. 14 illustrates single pass conversion rates versus cell potential for various unsintered applications of the amine functionalized silver nanoparticles.

To facilitate understanding, identical reference numerals have been used, where possible, to designate identical elements that are common to the figures.

### DETAILED DESCRIPTION

The present disclosure broadly discloses an example gas diffusion electrode with amine-functionalized silver nanoparticles and a method for fabricating the same. As discussed above, there is worldwide interest in CCU using electro-catalytic conversion of CO₂ into value-added chemicals and synthetic fuels.

The key to the electrochemical conversion process is the electro-catalysts with high efficiency and selectivity, as well as long-term stability. Recent years have witnessed significant advances in the development of electro-catalysts that can selectively reduce CO₂ to CO, including Au, Ag, Zn, Pd, and Ga, etc. Among all the candidates, silver shows the highest potential for large-scale applications, owning to its moderate cost and high catalytic selectivity for CO production. Despite the extensive study on Ag-based electro-catalysts, challenges remain in developing materials with enhanced catalytic selectivity at reduced overpotentials, in a simple, scalable, and cost-efficient way.

The present disclosure uses amine-functionalized silver nanoparticles as the electro-catalysts in the gas diffusion electrode for electro-catalytic conversion of CO₂. Nanostructured silver catalysts have shown improved performance compared to their bulk counterparts, as they offer mass-transport advantages and more highly active sites on the edges and corners of the nanomaterials. By tuning nanomaterial composition, size, morphology, porosity, and surface modification, nanostructured catalyst behaviors can be adjusted for specific applications.

Surface modification is one of the effective approaches to improve catalytic performance. Studies have suggested that functional molecules can decrease the overpotential or improve CO selectivity, e.g., amine-capped Ag nanoparticles show better catalytic performance through stabilizing the COOH* intermediate.

Integration of such electro-catalysts into the Membrane Electrode Assembly (MEA) is another key step to obtain desirable products. A typical MEA comprises two gas diffusion layers (GDLs) and an ion exchange membrane with catalyst particles dispersed at the interface, and its production is similar to the various roll-to-roll production methods utilized in printing. Despite the great effort in developing MEAs for CO2 conversion systems, it remains challenging to fabricate MEAs with low cost, high standard performance, and tunable properties.

The present disclosure provides a scalable approach to prepare MEAs for electrochemical reduction using amine-functionalized silver nanoparticle electro-catalysts that are efficient, selective, and have tunable catalytic properties. Amine-functionalized silver nanoparticles were synthesized and formulated into catalyst inks which were deposited on GDLs via continuous print/coating methods. The fabrication of MEAs with high Faradic efficiency and selectivity for CO are demonstrated under relatively low overpotentials. The electrochemical performance of the gas diffusion electrodes can be adjusted by sintering the amine-modified AgNP at different temperatures.

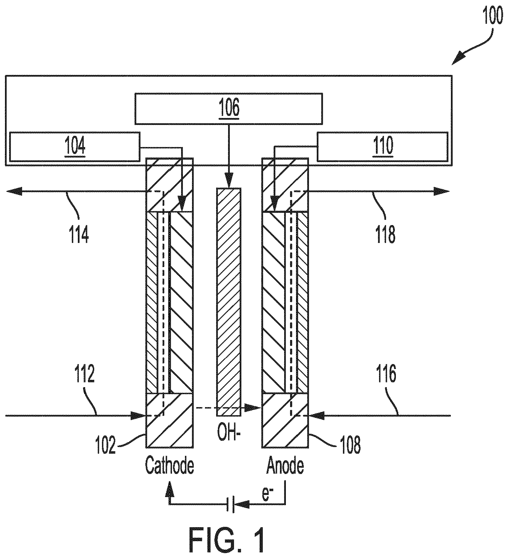

FIG. 1 illustrates an example membrane electrode assembly 100 that includes a gas diffusion electrode 104 of the present disclosure. The membrane electrode assembly 100 may be part of a flow cell electro-catalytic converter that is used to convert a compound into different desirable compounds. The gas diffusion electrode 104 of the present disclosure may provide a scalable electrode that is highly efficient at lower cell potentials (e.g., uses less power to perform the conversion).

One example conversion that can be performed by the membrane electrode assembly 100 is the conversion of carbon dioxide (CO₂) into carbon monoxide (CO) and hydrogen gas (H₂). However, it should be noted that the gas diffusion electrode 104 may be used for electro-catalytic conversion of other types of compounds within the context of flow cell electro-catalytic converters.

In one embodiment, the membrane electrode assembly 100 includes a cathode 102 having the gas diffusion electrode 104, an anion-exchange membrane 106, and an anode 108 with an iridium-oxide electrode 110. In one embodiment, an inlet 112 may feed CO₂ through the cathode 102 and an outlet 114 may carry the CO and H₂ away from the cathode 102. An inlet 116 may feed electrolytes (e.g., KHCO₃, KOH, KCI, and the like) through the anode 108 and an outlet may carry by-products away from the anode 108.

In one embodiment, a reference voltage may be applied to assist in the conversion of the CO₂ into CO and H₂. For example a cell potential may be applied to the membrane electrode assembly 100 via the reference voltage to perform the electro-catalytic conversion. The examples discussed herein applied a cell potential or overpotential of 2.80 Volts (V) to 3.80 (V).

In one embodiment, the gas diffusion electrode 104 may be fabricated with amine-functionalized nanoparticles. Details of the methods to fabricate the gas diffusion electrode 104 are discussed in further details below. The gas diffusion electrode 104 may be fabricated by sintering the amine-functionalized nanoparticles at a desired temperature (e.g., between 60 degrees Celsius (°C) to 200 °C) for a desired amount of time to achieve a desired catalytic performance of the gas diffusion electrode 104.

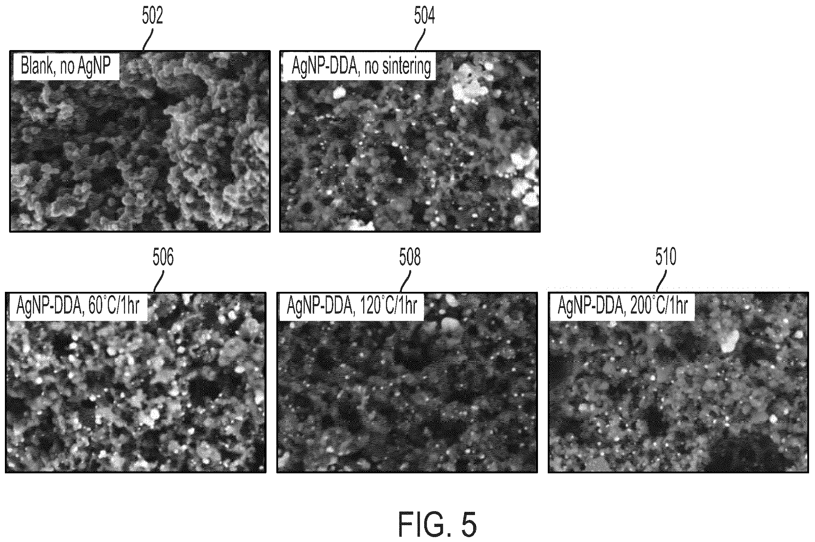

In one embodiment, the desired catalytic performance may be defined as a measure of conversion of CO₂ to CO at a given cell potential of a flow cell electro-catalytic converter that contains the gas diffusion electrode 104 of the present disclosure. For example, the gas diffusion electrode 104 may have a Faradic efficiency that is greater than 60% with a selectivity that is greater than 98% at overpotentials or a cell potential less than 3.50 V. The gas diffusion electrode 104 may have a single pass conversion rate of CO₂ to CO of greater than 25% at a cell potential less than 3.50V. The gas diffusion electrode 104 may have a current density of greater than 75 milliamps per square centimeter (mA/cm²) at a cell potential between 3.00 V to 3.50 V. The gas diffusion electrode 104 may have an energetic efficiency of greater than 25% at a cell potential of 3.00 V. A comparison of the various performance parameters of the gas diffusion electrode 104 at different sintering temperatures is illustrated in FIGs. 5-10 and discussed in further details below with reference to examples provided herein.

In one embodiment, the ion exchange member 106 may be a Dioxide Materials Sustainion X37-50-RT activated with potassium hydroxide (KOH) and rinsed with deionized water. The iridium-oxide electrode 110 may be an iridium oxide (IrO₂) coated carbon substrate with the catalyst facing up or towards the ion exchange member 106.

In one embodiment, the anolyte may be potassium bicarbonate (KHCO₃). The catholyte flow chamber may capture the CO and H₂ converted from the CO₂ provided by the carbon dioxide flow chamber. As noted above, the membrane electrode assembly may be used in a flow cell electro-catalytic converter system. Although various examples are provided for the anolyte, the anode 108, and the ion exchange membrane 106, it should be noted that other materials may be deployed.

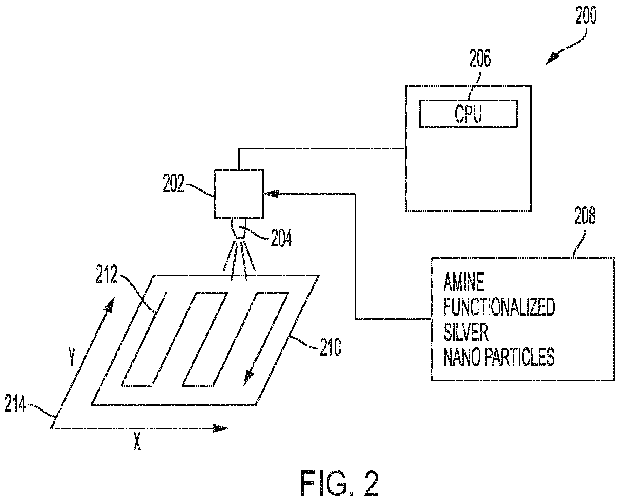

FIG. 2 illustrates a block diagram of an example printer 200 that can be used to spray amine functionalized silver nanoparticles 208 that are prepared for fabrication of the gas diffusion electrode 104. In one embodiment, the amine functionalized silver nanoparticles 208 may be prepared by mixing silver acetate with a compound having an amine functional group. The functional group may include at least one of butylamine, pentylamine, hexylamine, heptylamine, octylamine, nonylamine, decylamine, hexadecylamine, undecylamine, dodecylamine, tridecylamine, tetradecylamine, diaminopentane, diaminohexane, diaminoheptane, diaminooctane, diaminononane, diaminodecane, diaminooctane, dipropylamine, dibutylamine, dipentylamine, dihexylamine, diheptylamine, dioctylamine, dinonylamine, didecylamine, methylpropylamine, ethylpropylamine, propylbutylamine, ethylbutylamine, ethylpentylamine, propylpentylamine, butylpentylamine, tributylamine, trihexylamine, or a mixture of any combination thereof.

In one embodiment, the amine functionalized silver nanoparticles 208 may be prepared with dodecylamine. Example 1 below describes an example of the amine functionalized silver nanoparticles 208 with dodecylamine.

### Example 1:

Melted dodecylamine (222.39 grams (g), 1.1997 mol) was added to a 1 liter (L), 3 necked round bottom flask, fitted with an overhead stirring system, thermometer, and Argon (Ar) line. The reaction flask was immersed in a 35 degree Celsius (°C) water bath and stirring set to 300 rotations per minute (RPM). 15 milliliters (mL) of methanol was added to the flask followed by 75 mL decalin. Phenylhydrazine (16.2 g, 0.1498 mol) was then added with stirring and the temperature was stabilized at 35°C. Silver acetate powder (50 g, 0.2996 mol) was slowly added to the mixture, keeping the reaction temperature between 35-37 °C. Stirring slowly ramped to 500 RPM over silver acetate addition. Once the entirety of silver acetate was added, the reaction was brought to 40 °C and stirred for 1 hour.

After 1 hour, 375 mL of methanol was added and stirred for 10 minutes. Precipitate was filtered on a Buchner funnel with 2 filter media added (Whatman 934AH glass fiber paper on bottom, Whatman #54 filter paper on top). Filtration afforded a blue wetcake which was reslurried in 125 mL methanol for 10 minutes and filtered. The wash was repeated one additional time and dried under vacuum for 10 minutes to give bluish-grey silver nanoparticle (AgNP) wetcake (33.75 g). Particle size by Electrophoretic Light Scattering (ELS) was measured to be higher, Zave: 52.9 nanometers (nm), Zave (primary distribution): 11.2 nm, D(1,0): 9.3 nm.

The amine functionalized silver nanoparticles 208 may then be prepared into an ink form that can be dispensed by a printhead 202 with a spray nozzle 204 that is under the control of a central processing unit (CPU) 206 (also referred to as a processor or controller). The printhead 202 may move along an x-y coordinate system 214 to distribute the amine functionalized silver nanoparticles 208 across the surface of a substrate 210. Examples 2 and 3 describe examples of how the amine functionalized silver nanoparticles 208 are prepared into an ink form.

### Example 2 (decalin):

134.70 g of decalin was added to a 250 mL beaker fitted to overhead stirrer with a P4 impeller. 20.4 g of the AgNP, produced in Example 1 above, was added to the decalin. The mixture was stirred for 4 hours at 400 RPM with a constant flow of argon over the ink. After the 4 hours the ink was placed in an amber bottle and purged with argon. Particle size by Electrophoretic Light Scattering (ELS) was measured to be higher, Zave: 92.5 nm, Zave (primary distribution): 10.3 nm, D(1,0): 8.6 nm.

### Example 3 (toluene):

The procedure was the same as Example 2 above except the type of solvent used. For example, the decalin was replaced with toluene in the same amounts. Particle size by Electrophoretic Light Scattering (ELS) was measured to be higher, Zave: 280.3 nm, Zave (primary distribution): 10.4 nm, D(1,0): 8.8 nm. Both inks formulated by Example 2 and 3 were homogeneous and highly stable for over 6 months.

Although several examples with different solvents are provided above, it should be noted that other non-polar solvents can be used to prepare the ink form of the amine functionalized silver nanoparticles 208. Examples of other non-polar solvents may include cyclohexane, ethylcyclohexane, phenylcyclohexane, bicyclohexyl, xylenes, butanol, and the like.

The amine functionalized silver nanoparticles 208 in an ink form may then be printed onto a substrate 210. The substrate 210 may be an electrically conductive substrate. For example, the substrate 210 may be a carbon substrate. The amine functionalized silver nanoparticles 208 may be printed by spraying the substrate 210 with the amine functionalized silver nanoparticles 208 in an ink form.

In one example, the amine functionalized silver nanoparticles 208 in an ink form were spray coated with an ultrasonic spray coater with nitrogen flow gas at 34 kilopascals (kPa) at 0.17 cubic meters (m³) delivery per hour at a stand-off distance of 30 millimeters (mm) from a sonic head gas diffusion layer substrate. Sonication power was at 1.5 watts (W) and a conical vortex delivery pattern with 0.3 milliliters per minute (mL/min) ink delivery via a syringe pump. Printing was done via an X-Y ballscrew-stage with fixed Ultrasonic (e.g., Sonotek-Vortex) print head was 60 mm x 60 mm zone consisting of a serpentine path of 12 lines with a 5 mm spacing gap between them at a linear speed of 25 mm per second (mm/sec).

After the amine functionalized silver nanoparticles 208 in an ink form is printed onto the substrate 210, the amine functionalized silver nanoparticles 208 on the substrate 210 may be sintered to fabricate the gas diffusion electrode 104 with the desired catalytic performance characteristics. For example, the temperature and the amount of time the sintering is performed may be used to control the desired catalytic performance characteristics.

In one embodiment, sintering the amine functionalized silver nanoparticles 208 may cause the amine functionalized silver nanoparticles 208 to fuse together. However, in some embodiments, there may still be distinct nanoparticles that remain after sintering. The phrase "sintered amine-functionalized silver nanoparticles" covers embodiments where there are still distinct nanoparticles and embodiments where some or all of the nanoparticles have fused together after sintering.

In one embodiment, sintering the amine functionalized silver nanoparticles 208 may also remove most of the amine, but some of the amine may remain. For example, sintering the amine functionalized silver nanoparticles 208 may cause about 95% to about 5% of the amine to remain after sintering. In one example, about 50% to about 5% of the amine may remain after sintering. In one example, about 10% to about 5% of the amine may remain after sintering.

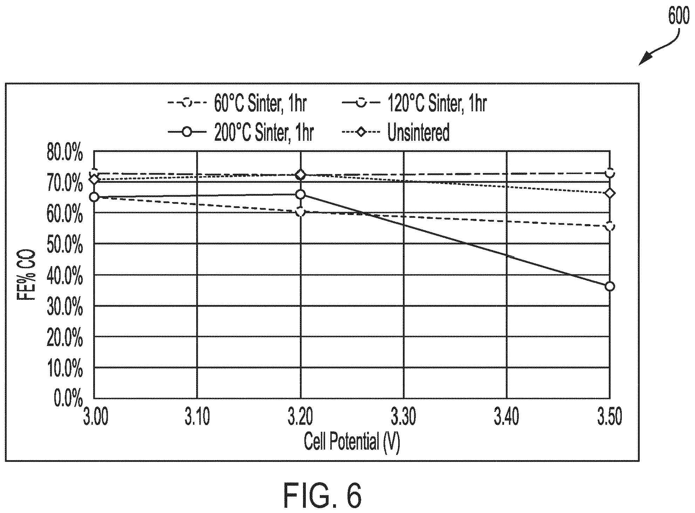

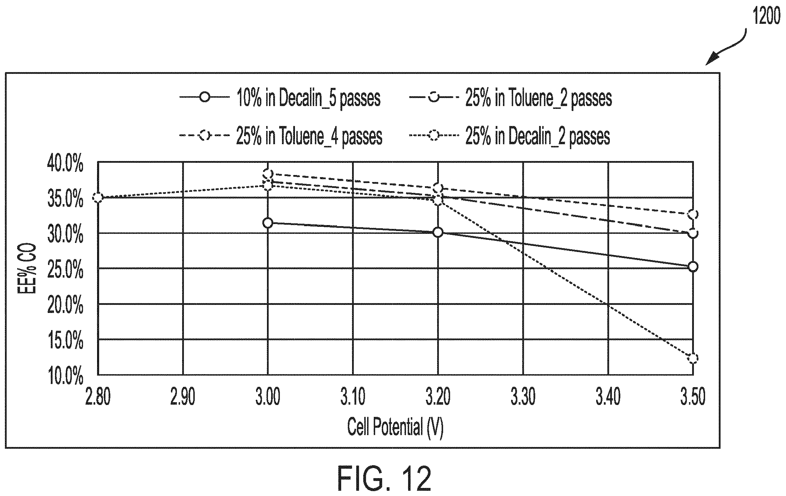

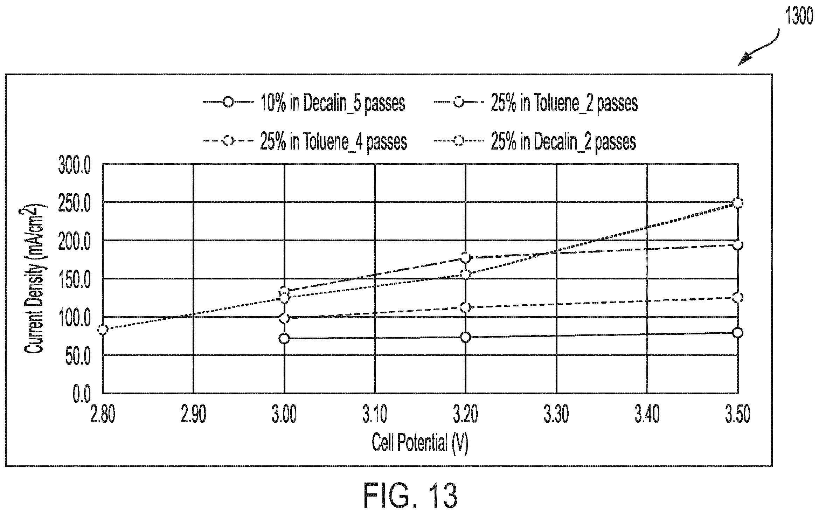

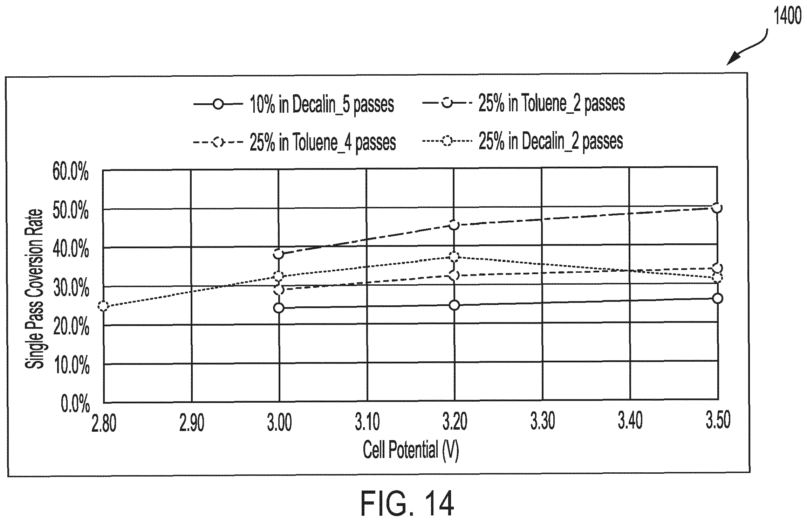

In an example, four different gas diffusion electrodes 104 were prepared. A first electrode received 5 passes of the amine functionalized silver nanoparticles 208 and received no sintering. A second electrode received 5 passes of the amine functionalized silver nanoparticles 208 and was sintered at 60 °C for 1 hour. A third electrode received 5 passes of the amine functionalized silver nanoparticles 208 and was sintered at 120 °C for 1 hour. A fourth electrode received 5 passes of the amine functionalized silver nanoparticles 208 and was sintered at 200 °C for 1 hour. FIGs. 5-14 illustrate image comparisons of the different fabricated electrodes with sintering at different temperatures and the comparative performance of each electrode. A multi-gas clip (mGC) measuring device was used to measure the gas concentrations before and after conversion to calculate the electrochemical performances shown in FIGs. 6-14.

FIG. 5 (comprising FIG. 5A, FIG. 5B, and FIG. 5C) illustrates scanning electron microscope (SEM) images of different types of electrodes. For example, SEM image 502 illustrates a gas diffusion electrode with no amine functionalized silver nanoparticles. SEM image 504 illustrates a gas diffusion electrode with the amine functionalized silver nanoparticles without sintering. SEM image 506 illustrates a gas diffusion electrode with the amine functionalized silver nanoparticles and sintered at 60 °C for 1 hour. SEM image 508 illustrates a gas diffusion electrode with the amine functionalized silver nanoparticles and sintered at 120 °C for 1 hour. SEM image 510 illustrates a gas diffusion electrode with the amine functionalized silver nanoparticles and sintered at 200 °C for 1 hour. The SEM images 506, 508, and 510 may illustrate examples of the gas diffusion electrode 104 described herein.

The bright dots in SEM images 504, 506, 508, and 510 illustrate the amine functionalized silver nanoparticles distributed across the carbon substrate. The conductivity of the carbon substrate may increase with increased sintering temperature, as the SEM images 504, 506, 508, and 510 display higher resolution due to more efficient electron transfer on the sample surface. It was noted that the particle sizes did not seem to change with sintering, which can be explained by the fact that the particles were sparsely distributed and there was not much chance for the amine functionalized silver nanoparticles to fuse together.

FIG. 6 illustrates a graph 600 of the Faradic efficiency versus cell potential for the four example electrodes described above at different sintered conditions. The Faradic efficiency is a measure of the specific electron efficiency participating in the desired electrochemical reaction. As shown in the graph 600 the faradic selectivity towards carbon monoxide was found to be highest for the third electrode sintered at 120 °C that were tested through a voltage region between 3.0 V to 3.5 V. However, all electrodes showed a faradic efficiency greater than 60%, and some greater than 70%.

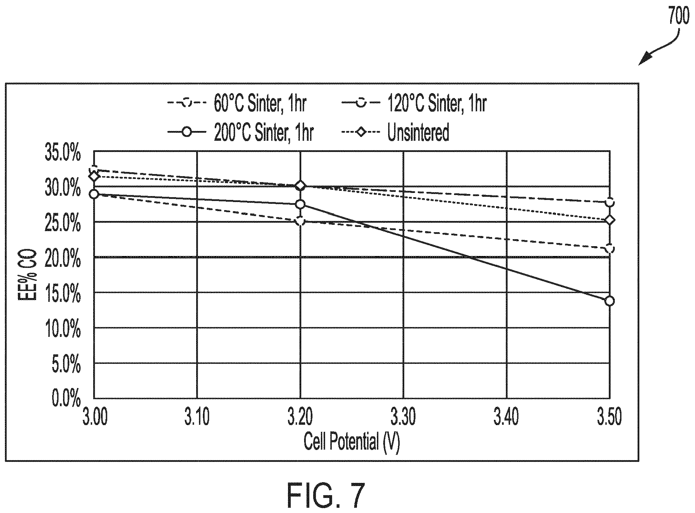

FIG. 7 illustrates a graph 700 of the energetic efficiency versus cell potential for the four example electrodes described above at different sintered conditions. The energetic efficiency is a measure of the true energy efficiency of the electrochemical conversion process. This is done by the multiplication of the faradaic efficiency with cell overpotential which yield the actual energy input.

The graph 700 illustrates that the highest performing electrode was the third electrode sintered at 120 °C. All electrodes showed an energetic efficiency greater than 25% at a cell potential of 3.0 V. All electrodes showed a degradation in energetic efficiency at higher potentials (e.g., increasing the cell potential from 3.0 V to 3.5 V).

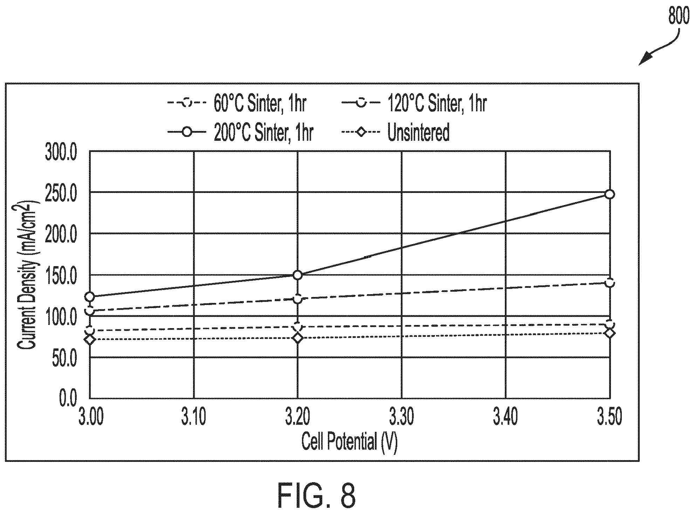

FIG. 8 illustrates a graph 800 of the current density in mA/cm² versus cell potential for the four example electrodes described above at different sintered conditions. The current density is a measure of the amount of charge able to be applied to the cell and is directly related to the maximum throughput or conversion rate. This makes the current density a critical factor when considering the scale-up economics of CO₂ electrolysis.

These measurements, shown in the graph 800, highlighted a positive correlation between increased current density with higher sinter temperatures. The un-sintered material shows the lowest current density across the range 3.0 - 3.5 V, which is possibly due to its lower surface conductivity than the sintered devices. Similarly, the high current density of the 200°C sintered sample electrode can be correlated to its higher conductivity, as amine functionalized silver nanoparticles fuse onto the carbon substrate creating better contact. All electrodes showed a current density of greater than 75 mA/cm² at a cell potential between 3.0 V to 3.5 V.

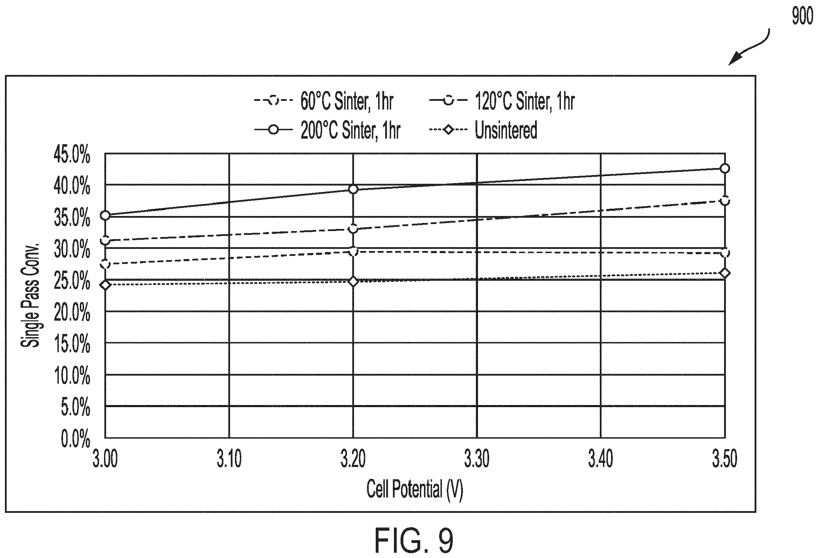

FIG. 9 illustrates a graph 900 of the single pass conversion rate versus cell potential for the four example electrodes described above at different sintered conditions. The single pass conversion rate is a performance metric often related to scale-up economics of conversion systems. In this instance the outlet CO flow rate is measured and used to calculate the molar conversion percentage of the input CO₂.

The measurements of the sintered electrodes showed an increase in single pass conversion with higher sinter temperatures. Similar to the current density results shown above in the graph 800, the lowest single pass conversion was measured with the un-sintered electrode. All electrodes showed a single pass conversion rate of greater than 20% at cell potentials between 3.0 V to 3.5 V. Some electrodes showed a single pass conversion rate as high as 35%.

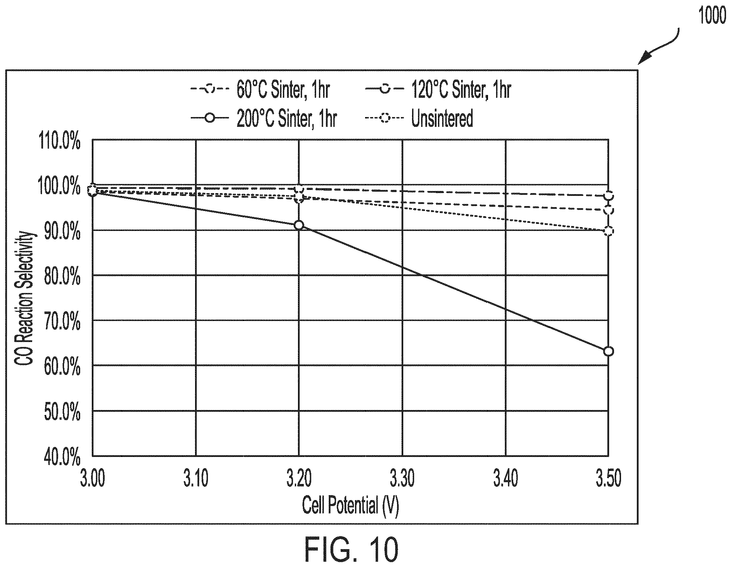

FIG. 10 illustrates a graph 1000 of the CO reaction selectivity versus cell potential for the four example electrodes described above at different sintered conditions. The CO reaction selectivity is quantified by the molar ratio of CO to H₂ produced during cell operation. As indicated by the graph 1000, the CO selectivity is generally very high at lower potential ~3.0 V, reaching over 98% for all four devices. With the increase in applied voltage, there is a declining trend in selectivity for all devices, but un-sintered and 200°C sintered device decreased the most. This may be because higher cell potentials promote hydrogen evolution and, thus, lower the CO reaction selectivity. It is worth noting that the 60°C and 120°C sintered devices showed high resistance to voltage change, meaning that even at high voltage, they are able to reduce CO₂ to CO selectively.

Based on an evaluation of the catalytic performance characteristics of the various electrodes, it was found that the third electrode sintered at 120 °C had the best overall performance. The third electrode sintered at 120 °C showed improved current density, single pass conversion rate, and CO reaction selectivity without sacrificing faradic efficiency and energetic efficiency. However, it should be noted that any of the example electrodes that were sintered at temperatures between 60 °C to 200 °C provided improved performance as the gas diffusion electrode 104 used in the membrane electrode assembly 100, described above.

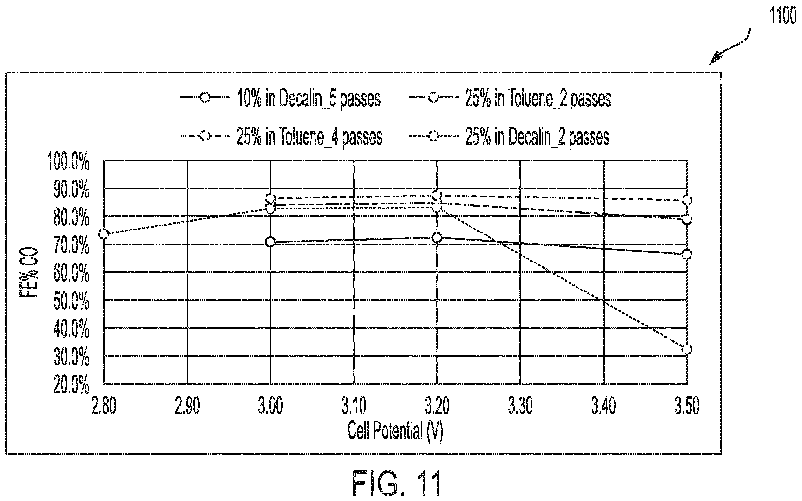

However, it should be noted that the sintering is an optional step. The amine functionalized silver nanoparticles 208 may be used in the gas diffusion electrode without sintering. FIGs. 11-14 illustrate various graphs 1100, 1200, 1300, and 1400 of the performance of the electrodes with various unsintered applications of the amine functionalized silver nanoparticles 208. It can be seen in the graphs 1100, 1200, 1300, and 1400 that the Faradic efficiency, energetic efficiency, current density, and conversion rate for the electrodes with unsintered amine-functionalized silver nanoparticles 208 may be almost as good as the electrodes with sintered amine-functionalized silver nanoparticles 208.

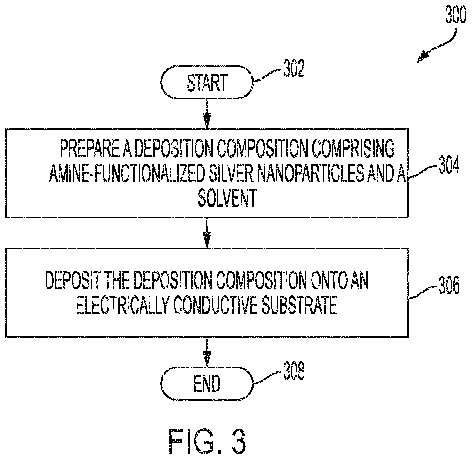

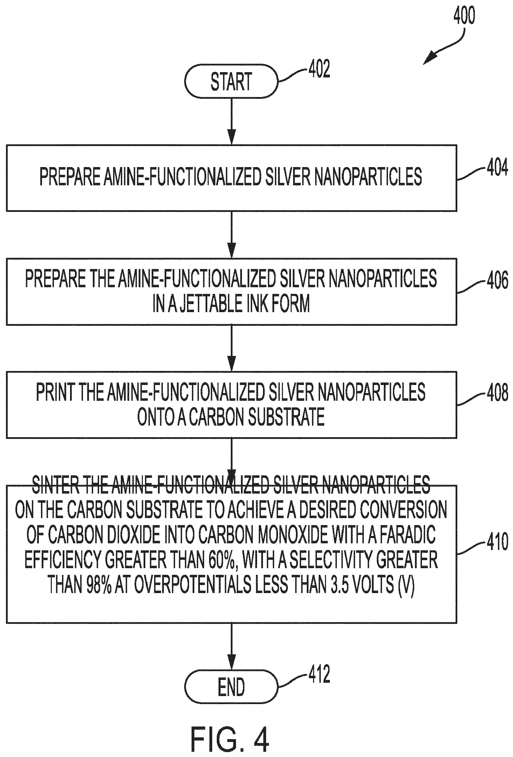

FIGs. 3 and 4 illustrate flowcharts of an example method 300 and 400, respectively, for fabricating an electrode of the present disclosure. In one embodiment, one or more blocks of the methods 300 and 400 may be performed by various tools or machines under the control of a central controller or processor (e.g., the printer 200) or in combination with manually performed steps to prepare the various compounds described herein.

Referring to method 300 in FIG. 3, at block 302, the method 300 begins. At block 304, the method 300 prepares a deposition composition comprising amine-functionalized silver nanoparticles and a solvent.

In one embodiment, the amine-functionalized silver nanoparticle with 1 to 70 weight percent of silver. In an example, the amine-functionalized silver nanoparticles can include 10-25 weight percent of silver.

In one embodiment, the amine-functionalized silver nanoparticles may be prepared by mixing silver acetate with a compound having an amine functional group. In one embodiment, the amine functional group may be at least one of butylamine, pentylamine, hexylamine, heptylamine, octylamine, nonylamine, decylamine, hexadecylamine, undecylamine, dodecylamine, tridecylamine, tetradecylamine, diaminopentane, diaminohexane, diaminoheptane, diaminooctane, diaminononane, diaminodecane, diaminooctane, dipropylamine, dibutylamine, dipentylamine, dihexylamine, diheptylamine, dioctylamine, dinonylamine, didecylamine, methylpropylamine, ethylpropylamine, propylbutylamine, ethylbutylamine, ethylpentylamine, propylpentylamine, butylpentylamine, tributylamine, trihexylamine, or any combination thereof. In one embodiment, the amine functionalized silver nanoparticles may be prepared by mixing silver acetate with dodecylamine, as described above in Example 1.

In one embodiment, the solvent may be a non-polar solvent. The amine-functionalized silver nanoparticles may be mixed with the non-polar solvent to form a jettable ink form of the amine-functionalized silver nanoparticles. In one embodiment, the amine-functionalized silver nanoparticles may be prepared as a jettable ink that can be printed via a spray nozzle controlled by a printhead. The non-polar solvent may include at least one of decalin, toluene, cyclohexane, ethylcyclohexane, phenylcyclohexane, bicyclohexyl, xylenes, butanol, and the like. The jettable ink can be formulated with decalin, as described above in Example 2 or with toluene, as described above in Example 3.

At block 306, the method 300 deposits the deposition composition onto an electrically conductive substrate. For example, the deposition composition of the amine-functionalized silver nanoparticles can be printed onto the electrically conductive substrate (e.g., a carbon substrate). For example, the amine-functionalized silver nanoparticles can be sprayed onto the electrically conductive substrate with the movable printhead.

In one embodiment, the amine-functionalized silver nanoparticles on the carbon substrate can be sintered to further tune the performance of the electrode. For example, the amine-functionalized silver nanoparticles on the carbon substrate can be sintered at a temperature between 60 degrees Celsius (°C) to 200 °C to achieve a desired catalytic performance of the gas diffusion electrode. For example, the amine-functionalized silver nanoparticles can be sintered at a temperature of 60 °C, 120 °C, 200 °C, and the like. As noted above, the gas diffusion electrode fabricated by sintering the amine-functionalized silver nanoparticles on to the carbon substrate may provide greater than 60% Faradic efficiency with a selectivity that is greater than 98% at overpotentials or cell potentials less than 3.5 V.

In one embodiment, the gas diffusion electrode may be assembled as part of a membrane assembly electrode that is deployed in a flow cell electro-catalytic converter. The gas diffusion electrode may perform conversion of CO₂ into CO and H₂, as described above. At block 308, the method 300 ends.

Referring to the method 400 in FIG. 4, at block 402, the method 400 begins. At block 404, the method 400 prepares amine-functionalized silver nanoparticles. In one embodiment, the amine-functionalized silver nanoparticles may be prepared by mixing silver acetate with a mixture of phenylhdrazine, methanol, decalin, and dodecylamine. The mixture of the silver acetate powder, phenylhdrazine, methanol, decalin, and dodecylamine may be heated. Then, methanol may be added to precipitate the amine-functionalized silver nanoparticles. Details of the preparation are described above in Example 1.

At block 406, the method 400 prepares the amine-functionalized silver nanoparticles in a jettable ink form. For example, the amine-functionalized silver nanoparticles may be mixed with decalin or toluene while stirring under a constant flow of argon. Details of preparing the jettable ink with decalin are described above in Example 2. Details of preparing the jettable ink with toluene are described above in Example 3.

At block 408, the method 400 prints the amine-functionalized silver nanoparticles onto a carbon substrate. For example, the amine-functionalized silver nanoparticles prepared as a jettable ink can be printed or sprayed onto the carbon substrate with nitrogen flow gas in a serpentine path 212 via a spray nozzle controlled by a printhead.

At block 410, the method 400 sinters the amine-functionalized silver nanoparticles on the carbon substrate to achieve a desired conversion of carbon dioxide into carbon monoxide with a Faradic efficiency greater than 60%, with a selectivity greater than 98% at overpotentials less than 3.5 Volts (V). For example, the amine-functionalized silver nanoparticles can be sintered at a temperature of 60 °C, 120 °C, 200 °C, and the like, for 1 hour.

In one embodiment, the gas diffusion electrode may be assembled as part of a membrane assembly electrode that is deployed in a flow cell electro-catalytic converter. The gas diffusion electrode may perform conversion of CO₂ into CO and H₂, as described above. At block 412, the method 400 ends.

It will be appreciated that variants of the above-disclosed and other features and functions, or alternatives thereof, may be combined into many other different systems or applications. Various presently unforeseen or unanticipated alternatives, modifications, variations, or improvements therein may be subsequently made by those skilled in the art which are also intended to be encompassed by the following claims.

## Claims

1. A method to fabricate an electrode, comprising:
preparing a deposition composition comprising amine-functionalized silver nanoparticles and a solvent; and
depositing the deposition composition onto an electrically conductive substrate.

2. The method of claim 1, further comprising:
sintering the amine-functionalized silver nanoparticles on the electrically conductive substrate.

3. The method of claim 2, wherein the sintering is performed at temperatures from about 60 degrees Celsius (°C) to about 200 °C.

4. The method of claim 1, wherein the amine-functionalized silver nanoparticles are prepared with a compound with an amine functional group.

5. The method of claim 4, wherein the amine functional group comprises at least one of: butylamine, pentylamine, hexylamine, heptylamine, octylamine, nonylamine, decylamine, hexadecylamine, undecylamine, dodecylamine, tridecylamine, tetradecylamine, diaminopentane, diaminohexane, diaminoheptane, diaminooctane, diaminononane, diaminodecane, diaminooctane, dipropylamine, dibutylamine, dipentylamine, dihexylamine, diheptylamine, dioctylamine, dinonylamine, didecylamine, methylpropylamine, ethylpropylamine, propylbutylamine, ethylbutylamine, ethylpentylamine, propylpentylamine, butylpentylamine, tributylamine, or trihexylamine.

6. The method of claim 1, wherein the solvent is non-polar and comprises at least one of: decalin, toluene, cyclohexane, ethylcyclohexane, phenylcyclohexane, bicyclohexyl, xylenes, or butanol.

7. The method of claim 1, wherein the depositing comprises:
spraying the deposition composition onto the electrically conductive substrate with a movable printhead.

8. An electrode, comprising:
an electrically conductive substrate; and
sintered amine-functionalized silver nanoparticles on a surface of the electrically conductive substrate.

9. The electrode of claim 8, wherein the electrically conductive substrate comprises a carbon substrate.

10. The electrode of claim 8, wherein about 95% to about 5% of amine remains in the sintered amine-functionalized silver nanoparticles from a deposition composition of amine-functionalized silver nanoparticles.

11. The electrode of claim 10, wherein the deposition composition of amine-functionalized silver nanoparticles is prepared in a jettable ink form.

12. The electrode of claim 8, wherein the sintered amine-functionalized silver nanoparticles comprise an amine functional group.

13. The electrode of claim 12, wherein the amine functional group comprises at least one of: butylamine, pentylamine, hexylamine, heptylamine, octylamine, nonylamine, decylamine, hexadecylamine, undecylamine, dodecylamine, tridecylamine, tetradecylamine, diaminopentane, diaminohexane, diaminoheptane, diaminooctane, diaminononane, diaminodecane, diaminooctane, dipropylamine, dibutylamine, dipentylamine, dihexylamine, diheptylamine, dioctylamine, dinonylamine, didecylamine, methylpropylamine, ethylpropylamine, propylbutylamine, ethylbutylamine, ethylpentylamine, propylpentylamine, butylpentylamine, tributylamine, or trihexylamine.

14. The electrode of claim 8, wherein the electrode is deployed in a gas diffusion electrode to convert carbon dioxide into carbon monoxide.

15. The electrode of claim 14, wherein the electrode has a Faradic efficiency of greater than about 60% at an overpotential of less than about 3.5 Volts.

16. The electrode of claim 14, wherein the electrode has a selectivity of greater than about 98% at an overpotential of less than about 3.5 Volts.

17. A membrane electrode assembly, comprising:
a cathode comprising amine-functionalized silver nanoparticles on an electrically conductive substrate;
an ion exchange membrane coupled to the cathode; and
an anode coupled to the ion exchange membrane.

18. The membrane electrode assembly of claim 17, wherein the cathode comprises a single pass conversion rate of greater than about 25% at a cell potential less than about 3.5 Volts.

19. The membrane electrode assembly of claim 17, wherein the cathode comprises a current density of greater than about 75 milliamps per square centimeter at a cell potential from about 3 Volts to about 3.5 Volts.

20. The membrane electrode assembly of claim 17, wherein the cathode comprises an energetic efficiency of greater than about 25% at a cell potential of about 3.00 Volts.
